# EUROPEAN PATENT APPLICATION

(11) **EP 0 594 190 A1**
(43) Date of publication of application: **27.04.1994**
(21) Application number: 93117149.0
(22) Date of filing: 22.10.1993
(51) Int. Cl.: C08F 10/00, C08F 4/655, C08F 4/656

(54) **Olefin polymerization catalyst and use**

(30) Priority: 23.10.1992 US 965632
(71) Applicant: PHILLIPS PETROLEUM COMPANY, Bartlesville Oklahoma 74004 (US)
(72) Inventor: Mitchell, Kent Edward, Bartlesville, OK 74006 (US); Welch, Melvin Bruce, Bartlesville, OK 74006 (US); Stacy, Elizabeth Mary, Bartlesville, OK 74006 (US)
(74) Representative: Dost, Wolfgang, Dr.rer.nat., Dipl.-Chem.

(57) **Abstract**

A process as disclosed for preparing a titanium-containing olefin polymerization catalyst that has improved utility for the copolymerization of ethylene and a higher alpha-olefin. The method involves the addition of a specified amount of water during the initial steps of the catalyst preparation. The resulting catalyst and its use in copolymerization are also described.

## Description

### Field of the Invention

The present invention relates to a titanium-containing olefin polymerization catalyst. In another aspect, the present invention relates to a titanium-containing olefin polymerization catalyst that is especially useful for the copolymerization of ethylene and at least one additional higher olefin. Still another aspect of the present invention relates to ethylene copolymerization using such a titanium-containing polymerization catalyst.

### Background of the Invention

U.S. Patent No. 4,636,746, the disclosure of which is incorporated herein by reference, discloses a particularly useful titanium-containing olefin polymerization catalyst. The catalyst is capable of being used in particle form type polymerizations to give exceptional yields of polymer. U.S. Patent No. 4,325,837, the disclosure of which is incorporated herein by reference, is directed to the modification of such catalysts. The modification involves a prepolymerization step which is effective in controlling the catalyst particle size and the particle size of polymer produced in a particle form type polymerization.

While these titanium-containing type catalysts can be employed for producing copolymers of ethylene and one or more higher alpha-olefins, it has been observed that the incorporation of the higher alpha-olefins is not as high as would generally be desired. In fact, commercially available chromium oxide polymerization catalysts are generally capable of incorporating comonomer at a rate of 20 times that of the titanium-based catalyst. Since the density of the polymer is related to the amount of comonomer incorporated, it is obvious that the ease with which comonomer can be incorporated can affect the ease with which specific copolymers can be obtained.

While the titanium catalyst is not as effective in incorporating comonomer, it is generally possible within limits to produce polymers of similar density with both the titanium and the commercial chromium oxide-containing catalyst. In order to produce lower density copolymers with the titanium-containing catalyst, however, it is generally necessary to use a higher ratio of the comonomer to ethylene. Increasing that ratio in a commercial reactor means that more comonomer must be flashed and/or recycled. This presents additional operating expenses and process difficulties. It is also generally believed that for some comonomers such as 1-hexene, the higher comonomer levels can cause polymer fluff swelling in the particle form polymerization. To counteract that swelling, the normal practice is to lower the reactor temperatures. However, lowering the reactor temperature decreases the rate at which the comonomer is incorporated. Accordingly, it is generally necessary to reach some sort of compromise between the comonomer level, ethylene level, and reactor temperature.

It is therefore desirable to find a method for altering the titanium-containing catalysts so that they will be more effective in incorporating comonomer.

An object of the present invention is to provide a process for preparing a titanium-containing catalyst that has an improved ability to incorporate comonomer. Another aspect of the present invention involves providing a process for copolymerizing ethylene and a higher alpha-olefin copolymer which provides improved comonomer incorporation.

Still another aspect of the present invention involves a new modified titanium-containing polymerization catalyst.

Other aspects, objects, and advantages of the present invention will be apparent to those in the art having the benefit of this disclosure.

### Summary of the Invention

In accordance with the present invention, there is provided a process for producing a particulate titanium-containing olefin polymerization catalyst that is especially useful for the copolymerization of ethylene and at least one additional higher alpha-olefin. The method comprises (1) combining components consisting essentially of a titanium alkoxide, magnesium dichloride, and optionally water in an organic liquid diluent to obtain a solution, (2) contacting the solution with at least one precipitating agent plus optional water to form a solid precipitate and (3) contacting said solid precipitate with an activating agent comprising titanium tetrachloride, before or after optional prepolymerization. The process is particularly characterized by the fact that the water employed in steps (1) and/or (2) is employed in an amount such that the resulting catalyst is more effective in incorporating the higher alpha-olefin when ethylene is copolymerized with a higher alpha-olefin than is a catalyst which is prepared in the same manner but without the water.

### Detailed Description of the Invention

As explained above, the present invention involves an improvement of catalysts of the types disclosed in U.S. Patent No. 4,325,837 and 4,363,746. Such titanium-containing catalysts are prepared by reacting at least one titanium alkoxide with a magnesium dihalide in a suitable liquid to form a solution. The resulting solution is then contacted with a suitable precipitating agent and the resulting solid is contacted with an activating agent comprising titanium tetrachloride. Examples of titanium alkoxides include the titanium tetraalkoxides in which the alkyl groups contain 1 to 10 carbon atoms each. Some specific examples include titanium tetramethoxide, titanium dimethoxide diethoxide, titanium tetraethoxide, titanium tetra-n-butoxide, titanium tetrahexyloxide, titanium tetradecyloxide, titanium tetraisopropoxide, and titanium tetracyclohexyloxide. Generally, titanium tetra-n-butoxide resulted in catalysts producing lower density polymer than did catalysts prepared using titanium tetraethoxide, or mixtures of titanium tetraethoxide and titanium tetraisopropoxide.

The magnesium halide is preferably selected from magnesium chloride. The titanium alkoxide and the magnesium dihalide can be combined in any suitable organic liquid. Examples include liquids such as n-pentane, n-hexane, isopentane, n-heptane, methylcyclohexene, toluene, xylene, and the like. Preferably, if the solvent contains the added water, it is generally preferable to add first the magnesium dichloride and then the titanium alkoxide. The molar ratio of the titanium alkoxide to the magnesium dihalide can vary over a relatively broad range depending upon the particular results desired. Generally, the molar ratio of the titanium tetraalkoxide to the magnesium dihalide is in the range of about 10:1 to about 1:10, preferably between about 5:1 to about 0.25:1, and still more preferably in the range of about 3:1 to about 0.5/1. Generally, after the titanium tetraalkoxide and the magnesium dichloride are combined in the organic solvent, it is desirable to heat the mixture to dissolve a substantial portion of the magnesium dichloride. Generally, the components are mixed at a temperature in the range of about 15°C to about 150°C. The mixing can be carried out at atmospheric pressure or at higher pressures.

The time required for heating the two components to form a solution is any suitable time which will result in dissolution of a substantial portion. Generally, preferably this would be a time within the range of about 5 minutes to about 10 hours. The optimum time involved can be readily determined by routine experimentation. Following the formation of the solution, the resulting solution can he filtered to remove any undissolved material or extraneous solid, if desired.

It has been found desirable to allow for a limited amount of oxygen to be present during the formation of the solution. In order to obtain catalysts with the best activity, it has been found desirable to conduct the contacting of step (1) in the presence of a limited amount of or by using liquids containing some oxygen. For example, it has been noted that if oxygen is extensively excluded from the mixture then when the magnesium dihalide is being heated with the titanium tetraalkoxide, a color change occurs. Specifically, the solution turns purple. It is theorized that this may be due to the formation of titanium (III). It has been observed that the more intense the purple color, the less active the final catalyst. Accordingly, it is desirable to conduct this step in the presence of an amount of oxygen that minimizes the formation of a purple solution. Obviously, the amount of oxygen allowed during this step is somewhat limited by safety considerations. The amount of oxygen should obviously be kept below levels that would pose a danger of explosion. One way of insuring that a suitable amount of oxygen is present is to employ a liquid containing some oxygen. Accordingly, it is often desirable to limit the nitrogen purging of at least some of the liquids to avoid the formation of the purple color.

Another technique involves combining the magnesium dichloride and the titanium alkoxide in an open container in a dry box containing a small amount of oxygen, i.e. about 90 to about 100 ppm, then capping the container, and then carrying out the heating step.

The precipitating agent can be selected from any of the compounds set forth in U.S. Patent No. 4,363,746, column 6, line 61 through column 7, line 62. Thus, the precipitating agent can be selected from the group consisting of organometallic compounds of Groups I, II, and III of the Periodic Table, metal halides and oxyhalides of elements of Groups IIIA, IVA, IVB, VA, and VB of the Periodic Table hydrogen halides, and organic acid halides. It is within the scope of the present invention to employ more than one of said precipitating agents. As a general rule, the best results are obtained if the precipitating agent is added relatively quickly to the solution.

It is currently preferred to employ a precipitating agent which includes an organoaluminum halide. Particularly preferred are alkylaluminum halides in which the alkyl groups have 1 to 8 carbon atoms. Some specific examples of such precipitating agents include ethylaluminum sesquichloride, and ethylaluminum dichloride.

The amount of precipitating agent employed can be selected over a relatively broad range depending upon the particular activities desired. Generally, the molar ratio of the transition metal of the titanium-containing component to the precipitating agent is within the range of from about 10:1 to about 1:10 and more generally within the range of about 2:1 to about 1:3.

In one especially preferred embodiment, the solution resulting from step (1) is contacted first with silicon tetrachloride and then with an organoaluminum halide. In the embodiment where both silicon tetrachloride and an organoaluminum halide are used in the precipitating step they can vary over a wide range. An example of the molar ratios of the silicon tetrachloride to ethylaluminum dichloride that have been used include the range of about 0.4:1 to about 12:1 for the molar ratios of the titanium tetraalkoxide to the silicon tetrachloride in the range of about 0.4:1 to about 3.5:1.

It has been observed that varying the molar ratio of silicon tetrachloride to organoaluminum halide can affect the bulk density of the polymer produced with the catalyst. For example, when a solution is formed from 3.4 grams of magnesium dichloride and 15 grams of titanium tetraethoxide and such solution is first contacted with silicon tetrachloride and then with ethylaluminum dichloride (EADC), particularly good results in terms of polymer bulk density were observed if one used 3.5 grams of silicon tetrachloride and 6 grams of a heptane solution containing 25 weight percent ethylaluminum dichloride. In contrast, when 24 grams of SiCl₄ and 24 grams of the EADC solution were employed, a polymer of much lower bulk density was obtained. Similarly, low polymer bulk density was observed when 3.5 grams of SiCl₄ and 24 grams of the EADC solution were employed. Somewhat higher bulk density polymer was obtained from catalyst prepared using either (1) 12 grams of SiCl₄ and 12 grams of the EADC solution or (2) 24 grams of SiCl₄ and 6 grams of the EADC solution. However, the best bulk density polymer was obtained using a catalyst prepared using 3.5 grams of SiCl₄ and 6 grams of the EADC solution.

In especially preferred embodiments of the present invention, the catalyst contains an amount of prepolymer sufficient to improve the particle size of the catalyst and ultimately the size of the polymer particles produced in the polymerization reaction. Techniques for conducting such prepolymerization are disclosed in U.S. Patent No. 4,325,837.

One way of forming prepolymer involves conducting the precipitation in the presence of an aliphatic mono-1-olefin. Another technique involves contacting the precipitated solid with an aliphatic mono-1-olefin under suitable conditions to form prepolymer. This can be done either before or after the solid is treated with titanium tetrachloride. Examples of olefins which can be used for forming prepolymer include ethylene, propylene, 1-butene, 1-pentene, 1-hexene, 1-heptene, 4-methyl-1-pentene, 1-octene, and the like and mixtures of one or more thereof. The weight of prepolymer based on the total weight of the prepolymerized catalyst is generally in the range of from about 1 to about 90 wt. %, more preferably about 1 to about 80 wt. %, and still more preferably about 1 to about 60 wt. %.

In accordance with the present invention, water is employed in making the catalyst in step (1), step (2), or in both steps. The amount of water employed is an amount which will provide an improvement in the effectiveness of the final catalyst in the incorporation of C₃ and higher alpha-olefins when ethylene is copolymerized with such higher alpha-olefins. The water can be added in any suitable fashion. Water can first be combined with the titanium alkoxide, or first with the magnesium dihalide, or after the magnesium dihalide and the titanium alkoxide have been combined. A currently preferred procedure involves actually adding water as such in the reaction step. An alternative for step (1) would involve employing magnesium dihalide which has a suitable amount of water associated therewith. Typically the molar ratio of the total amount of water employed to the magnesium dihalide in steps (1) and (2) is in the range of from about 0.10 to about 3:1, more preferably about 0.25:1 to about 1.5:1. The molar ratio of about 1:1 has been found to be particularly desirable.

The amount of the titanium tetrachloride-containing activating agent to the solid precipitate can vary over a wide range; however, as a general rule the weight ratio of the titanium tetrachloride to the prepolymerized or unprepolymerized solid would generally be in the range of 10:1 to about 1:10, more generally about 7:1 to about 1:4.

The resulting catalyst may be used in polymerization in the same fashion as the catalyst described in the aforementioned U.S. Patent Nos. 4,325,837 and 4,363,746.

Generally the catalyst would be employed in combination with a suitable cocatalyst. While it is considered that any of the cocatalysts that have been used in the past with similar titanium-based catalysts can be employed, including alkyl aluminoxanes such as methyl aluminoxane, the currently preferred cocatalysts are trialkylaluminums, especially triethylaluminum.

Typical polymerizations include solution, slurry (i.e., particle form), and gas phase. The present inventive catalyst is particularly useful for the particle form polymerization, especially particle form polymerizations involving the use of continuous loop-type reactors. Examples of such processes which could be employed with the inventive catalyst are disclosed in U.S. Patents 3,152,872 and 4,424,341, the disclosures of which are incorporated herein by reference.

The resulting catalyst may if desired be mixed with a particulate diluent such as, for example, silica, silica-alumina, silica-titania, magnesium dichloride, magnesium oxide, polyethylene, polypropylene, and poly(phenylene sulfide), prior to the use of the catalyst in a polymerization process. The weight ratio of the particulate diluent to the catalyst can be varied over a wide range. Typically, the weight ratio of the particulate diluent to the catalyst is generally within the range of about 100 to 1 to about 1 to 100, or more often in the range of about 20 to 1 to about 2 to 1. The use of a particulate diluent such as fumed silica has been found to be particularly effective in facilitating the controlled charging of the catalyst to the reactor.

Any suitable comonomer or combination thereof can be employed to form the ethylene copolymer. Typically alpha-olefin comonomers having 3 to 10 carbon atoms per molecule would be employed. Some particular examples include 1-butene, 1-hexene, 1-pentene, 4-methyl-1-pentene, and the like. Often, if propylene is employed as a comonomer, it is preferable to employ at least one other alpha-olefin comonomer having at least 4 carbon atoms in an amount of at least about one percent of the weight of the polymer. Generally it is desirable for the reaction to be conducted under conditions such that the copolymer is comprised of at least about 80 mole percent ethylene.

In the particle form polymerization, the temperature and pressure conditions are selected to assure that the polymer can be recovered as discreet particles. Typically this involves temperatures in the range of about 50°C to about 110°C, more generally about 70°C to about 110°C. In a continuous loop particle form process, a particularly preferred embodiment involves a reactor temperature in the range of about 80°C to about 110°C and a pressure of about 400 to about 700 psi. Any suitable polymerization diluent which is liquid under the polymerization conditions can be employed. It is currently preferred to use hydrocarbons, for example isobutane or propane as the liquid diluent.

The molar ratio of the comonomer to ethylene can vary over a wide range depending upon the particular results desired. One typical range for the molar ratio of comonomer to ethylene would be in the range of about 5:1 to about 0.5:1.

A further understanding of the present invention and its objects and advantages will be provided by the following examples.

### Example I

A catalyst referred to herein as catalyst A was prepared by charging 150 grams of hexane to a bottle and then adding 3.5 grams of anhydrous magnesium dichloride obtained from a dry box and 15 grams of titanium tetraethoxide. The resulting mixture was then heated to 100°C and held at that temperature for one hour. It was then cooled down to 20°C. Then 3.5 grams of silicon tetrachloride was added to the bottle and mixed for 30 minutes. Then 24 grams of a heptane solution containing 25 wt. percent ethylaluminum dichloride was added to the slurry and the slurry was mixed for an additional two hours. The liquid was decanted and the solid was washed three times with hexane. Then 27 grams of titanium tetrachloride was combined with the solid and the resulting slurry was mixed for 60 minutes. The resulting solid was recovered and washed five times with hexane.

A catalyst referred to herein as catalyst B was prepared by charging a bottle with 150 grams of hexane. Then 3.4 grams of anhydrous magnesium chloride and 6.4 grams of titanium tetrabutoxide was added to the hexane. The resulting mixture was heated to 100°C and held for one hour at that temperature. It was cooled down to 20°C and then 12 grams of silicon tetrachloride was added and the mixture was stirred for 30 minutes. Then 12 grams of a heptane solution containing 25 wt. % ethylaluminum dichloride was added and the mixture was stirred for an additional 10 minutes. About 1 gram of ethylene was then added and the slurry was mixed for 30 minutes to form prepolymer on the solid. The liquid was decanted and the solid was washed three times with hexane. The resulting solid was then contacted with 27 grams of titanium tetrachloride and mixed for 60 minutes.

A catalyst referred to herein as catalyst C was prepared by charging a bottle with 150 grams of hexane. Then 3.5 grams of anhydrous magnesium dichloride was added to the hexane. Then 0.8 milliliters of water was added over 30 minutes. The mixture was heated up to 50°C for 80 minutes and then cooled down to about 30°C. Then 6.4 grams of titanium tetrabutoxide was added and the resulting mixture was heated to 100°C and held at that temperature for one hour. It was then cooled down to 20°C. Then 12.6 grams of silicon tetrachloride was added and the mixture stirred for 30 minutes. Then 12.5 grams of a heptane solution containing 25 wt. % ethylaluminum dichloride was added, and the mixture was stirred for 10 minutes. The liquid was then decanted and the solids were washed three times with hexane. The solids were then contacted with 27 grams of titanium tetrachloride and held for 60 minutes. The resulting solids were washed 5 times with hexane, and then the solids recovered to give catalyst C.

A catalyst referred to herein as catalyst D was prepared by charging a bottle with 150 grams of hexane. Then 3.4 grams of anhydrous magnesium dichloride was added followed by the addition of 0.8 milliliters of water over 30 minutes. The resulting mixture was heated to 50°C and held at that temperature for 80 minutes. It was then cooled down to 30°C and 6.4 grams of titanium tetrabutoxide was added. The mixture was then heated to 100°C and held at that temperature for 1 hour. Then the mixture was cooled to 20°C and 12 grams of silicon tetrachloride was added, and the resulting mixture stirred for 30 minutes. Then 12 grams of a heptane solution containing 25 wt. % ethylaluminum dichloride was added and the mixture was stirred for 10 minutes. The liquid was decanted and the solids washed three times with hexane. Then 12 grams of the heptane solution of 25 weight percent ethylaluminum dichloride was added and the mixture was stirred for 10 minutes. Then about 10 grams of ethylene was added and the mixture was stirred for 30 minutes with the pressure at 10 psi. The resulting prepolymerized catalyst was washed three times with hexane and then the resulting solid was contacted with 37 grams of titanium chloride and mixed for 30 minutes. The resulting prepolymerized catalyst was then washed five times with hexane.

### Example II

Each of the catalysts prepared as described in Example I were then evaluated for the copolymerization of ethylene and 1-hexene. A one gallon capacity autoclave reactor was used. The reactor was prepared for each polymerization run by adding about 1 liter of isobutane, heating to 110°C for 1 hour, draining the reactor and flushing it with nitrogen-free isobutane. The cocatalyst, viz. triethylaluminum, and the catalyst slurry were added to the flushed reactor. The reactor was then sealed and hydrogen was added. Additional isobutane was added and the reactor was adjusted to just under operating temperature. Then ethylene was introduced and continually fed to the reactor over a 1 hour period so that constant pressure was maintained. The 1-hexene comonomer was added from a side port along with the ethylene. At the end of 1 hour, the ethylene flow was stopped and the reactor was vented. The polymer in the reactor was collected, vacuum dried at 60°C, and weighed. All the copolymer runs were made with 90 grams of 1-hexene, 0.5 milliliters of a 15 weight percent solution of triethylaluminum in n-heptane at 90°C, 25 psig hydrogen from a 2.25 liter vessel, and a total reactor pressure of 324 psig.

The melt index (MI) was measured according to ASTM D-1238 condition 190/2.16. The polymer densities were measured on compression molded specimens according to ASTM D-1505. The results of the polymerizations are set forth in Table I.

**Table I**

| Effect of Water | | | | |
|---|---|---|---|---|
| Run | Catalyst | MI | Density | Corrected Density to 1 MI |
| 1 | A (Control) | 2.38 | 0.9463 | 0.945 |
| 2 | B (Control) | 1.47 | 0.9433 | 0.943 |
| 3 | C (Invention) | 1.14 | 0.9402 | 0.940 |
| 4 | D (Invention) | 1.42 | 0.9394 | 0.939 |

The results indicate that the two control catalysts were similarly effective in hexene incorporation as reflected by the similar densities in the obtained polymers. This is in spite of the fact that control catalyst A was produced using titanium tetraethoxide rather than titanium tetrabutoxide and that control B was subjected to prepolymerization. Inventive catalyst C produced a polymer having significantly lower density. Inventive catalyst D, a prepolymerized version of inventive catalyst C, also produced a polymer of significantly lower density. This indicates that the addition of the water during the preparation of the inventive catalysts has increased the efficiency of the catalyst for the incorporation of 1-hexene.

### Example III

Another series of inventive catalysts were prepared to evaluate the effect of the order of addition of the water. In some runs the water was added to the hexene, then the magnesium dichloride was added, and then the titanium tetrabutoxide was added. In other runs, water was again added to the hexane followed by the addition of titanium tetrabutoxide and then the anhydrous magnesium dichloride. In another run, the magnesium dichloride was added to the hexane and then the titanium tetrabutoxide and the water were added at the same time. In still another run, the titanium tetrabutoxide was first added to the hexane, then the water was added, and then the magnesium dichloride was added. In another series of runs, the magnesium dichloride and titanium tetrabutoxide were added to the hexane and then the water was added as an admixture of water and silicon tetrachloride during the precipitation step. A typical example of this last preparation involved charging 150 grams of hexane into a bottle. Then 3.4 grams of magnesium dichloride was added followed by 6.4 grams of titanium tetrabutoxide. This mixture was heated up to 100°C and held at that temperature for 1 hour. It was then cooled down to 30°C. A solution of 12 grams of silicon tetrachloride and 50 grams of hexane and 0.2 grams of water was then added to the resulting solution. Subsequently, 12 grams of a heptane solution containing 25 weight percent ethylaluminum dichloride was added, and the mixture was stirred for 10 minutes. The liquid was decanted, and the solid was washed three times with hexane. The solid was then treated with 27 grams of titanium tetrachloride and mixed for 60 minutes. The resulting solid was washed five times with hexane.

When these catalysts were evaluated for the copolymerization of ethylene and 1-hexene using the conditions as previously described, it was observed that based upon the densities, the order of addition of the water did not appear to effect the efficiency of the 1-hexene incorporation. The resulting polymers all had substantially similar densities.

### Example IV

Another series of inventive catalysts were prepared in this case on a larger scale and without using silicon tetrachloride in the precipitating step.

A catalyst referred to herein as catalyst E is a typical example. The catalyst was prepared by adding 7 gallons of hexane to a reaction vessel. Then 98 grams of distilled water was added and the mixture was stirred for 15 minutes. Then 420 grams of anhydrous magnesium chloride was added and the mixture was stirred for 10 minutes. Then 1.9 pounds of titanium tetra-n-butoxide was added and the mixture was heated to 100°C. The mixture was held at that temperature for 1 hour and then cooled overnight while continuing to be mixed. The resulting mixture was cooled to 20°C and 3.2 pounds of a 25 wt. % heptane solution of ethylaluminum dichloride was added at a rate of 0.8 pounds per minute. The resulting mixture was stirred for 10 minutes and then the liquid was decanted and the solid was washed three times with hexane. The resulting solid while in n-hexane was cooled to 18°C, then 1.5 pounds of a 25 wt. % heptane solution of ethylaluminum dichloride was added, and 2 pounds of ethylene was added. The ethylene flow was controlled so that the pressure stayed at around 20 psi. The resulting mixture was stirred for 2 hours and 11 minutes. Then the liquid was decanted and the prepolymerized solids were subjected to a hexane wash. Approximately 1 pound of ethylene had reacted. After two additional hexane washes, the prepolymerized solid was combined with 7.3 pounds of titanium tetrachloride and mixed for 1 hour. The liquid was decanted and the solid was washed five times with n-hexane.

This catalyst was then used to carry out copolymerization of ethylene and 1-hexene in the same manner as described in Example II. A control polymerization was also carried out employing a prepolymerized catalyst known to be commercially useful. Water was not employed in producing the control catalyst. The control catalyst was prepared by forming a solution of titanium tetraethoxide and anhydrous magnesium dichloride which was precipitated using ethylaluminum dichloride. The precipitated solid was prepolymerized and then treated with titanium tetrachloride. The inventive catalyst produced a polymer having a density of 0.9362 and a melt index of 2.03. The corrected density to 1 MI was thus 0.935. In contrast, the polymerization with the control catalyst yielded a polymer having a density of 0.9443 and a melt index of 1.62 for a corrected density of 0.943. This again demonstrates that the water has an effect upon the comonomer incorporation. In fact, the effect in this case was even greater than for the catalyst prepared using both silicon tetrachloride and ethylaluminum dichloride in the precipitating step.

### Example V

A series of catalysts were prepared to evaluate the effects of various variables in the catalyst synthesis. The constant conditions involved adding 150 ml of hexene to a warm pop bottle. The bottle was capped, and the solvent purged with nitrogen for 20 minutes. Then deionized water was added. About 3.9 grams (40.9 mmol) of magnesium dichloride was employed. About 7 ml (20.7 mmol) of titanium butoxide was added at a rate of 0.2 ml per minute using a syringe pump. The mixture was stirred for 10 minutes before being heated to 100°C and stirred at this temperature for 1 hr. The mixture was cooled to room temperature and then 15.6 ml of a heptane solution containing 25 wt. % ethylaluminum dichloride (23.5 mmol) was added using a syringe pump. After stirring for 10 min., the solid was allowed to settle and the liquid was removed using a cannula. The solid was washed three times with hexane. Then 15.6 ml of titanium tetrachloride was added dropwise at a rate of 2 ml per minute using a syringe pump. After 1 hr. of stirring, the mixture was allowed to settle and the supernatant liquid removed using a cannula. The resulting solid was then washed five times with hexane to remove unreacted titanium tetrachloride.

The variables involved in preparing the various catalysts were: the mmol of water which were varied from 10.1 to 61.1; in some cases the water was deoxygenated; in some cases the titanium tetrabutoxide was deoxygenated; in some cases the magnesium chloride was added to the wet hexane; whereas in some cases the titanium tetrabutoxide was added to the wet hexane before the addition of the magnesium chloride; the addition temperature of the titanium alkoxide which was varied from about 24°C to about 65°C; and the rate of addition of the ethylaluminum dichloride which was varied from about 0.5 ml per minute to about 50 ml per minute. The resulting catalysts were then evaluated for the copolymerization of ethylene. The polymerizations were carried out at 90°C in a 3.8 liter autoclave reactor. The reactor was prepared for polymerization by heating to 110°C for 1 hr. The reactor was then cooled to room temperature where it was flushed with nitrogen free isobutane. After the reactor had cooled, the catalyst slurry was charged followed by the addition of 1 ml of a 15 weight percent solution of triethylaluminum in heptane. The reactor was sealed and 25 psig of hydrogen was added as measured by a pressure drop in a 2.4 liter vessel. Next 2 liters of isobutane was added using nitrogen purge being careful not to get nitrogen into the reactor. The reactor was then heated to the polymerization temperature and 90 grams of 1-hexene were pressured in from a side port. Ethylene was constantly added to keep the total reactor pressure at 324 psig. After 1 hr. the polymerization was terminated by stopping the flow of ethylene and the reactor was vented. The polymer was collected, dried overnight, weighed, and evaluated to determine the melt index and densities.

As a result of these evaluations, it was determined that it was generally preferable to add the magnesium dichloride to the water-containing hexane first rather than adding the titanium alkoxide to the water-containing hexane first. The best results in terms of low density polymer were obtained when the water to titanium alkoxide mole ratio was in the range of about 0.5:1 to about 1:1. The faster ethylaluminum dichloride addition rates also favored the production of a catalyst which yielded lower density polymer. The presence of oxygen during the formation of the soluble complex appeared to help comonomer incorporation, particularly when there was oxygen present in the titanium tetraalkoxide. The addition of the alkoxide at a low temperature also appeared to improve the comonomer incorporation of the resulting catalyst.

## Claims

1. A process for preparing a particulate titanium-containing olefin polymerization catalyst comprising
(1) combining a titanium alkoxide, a magnesium halide, and optionally water in an organic liquid diluent to obtain a solution,
(2) contacting the solution with at least one precipitating agent, plus optional water, said precipitating agent being selected from organometallic compounds of metals of Groups I, II, and III of the Periodic Table, metal halides and oxyhalides of elements of Groups IIIA, IVA, IVB, VA, and VB of the Periodic Table, hydrogen halide, and organic acid halides, to form a solid precipitate, and
(3) contacting said solid precipitate with an activating agent comprising titanium tetrachloride, before or after optional prepolymerization.

2. The process of claim 1 wherein the molar ratio of total water employed to the magnesium dihalide is in the range of 0.1 : 1 to 3 : 1, preferably from 0.25 : 1 to 1.5 : 1.

3. The process of claim 1 or 2 wherein the magnesium dihalide is magnesium dichloride.

4. The process of any of the preceding claims wherein said titanium alkoxide has the formula Ti(OR)₄ wherein each R is the same or different alkyl radical having 2 to 6 carbon atoms.

5. The process of claim 4 wherein said titanium alkoxide is selected from titanium tetraethoxide, titanium tetrabutoxide and titanium tetra n-butoxide.

6. The process of any of the preceding claims wherein said precipitating agent is an organoaluminum halide.

7. The process of claim 6 wherein said precipitating agent is selected from ethylaluminium sesquihalide and ethylaluminium dichloride.

8. The process of any of the preceding claims wherein the water is added in step (1).

9. The process of any of the preceding claims wherein step (1) is conducted in the presence of oxygen.

10. The process of any of the preceding claims wherein in step (1) water and the titanium alkoxide are contacted together before being contacted with the magnesium dihalide.

11. The process of any of the preceding claims wherein said precipitating agent further comprises silicon tetrachloride with the solution of step (1) being contacted first with said silicon tetrachloride, and then with said organoaluminium halide.

12. The process of claims 1, 3, 5, 7 and 11 wherein the molar ratio of titanium tetrabutoxide to magnesium dichloride is in the range of 0.5 : 1 to 3 : 1, the molar ratio of SiCl₄ to ethylaluminium dichloride is in the range of 0.4 : 1 to 12 : 1, and the molar ratio of titanium tetrabutoxide used in step (1) to the SiCl₄ is in the range of 0.4 : 1 to 3.5 : 1.

13. The use of the catalyst as obtained in any of claims 1 to 12 for preparing an ethylene copolymer wherein ethylene and at least one higher alpha-olefin are contacted in a liquid diluent under particle form polymerization conditions in the presence of said catalyst.
